# EUROPÄISCHE PATENTSCHRIFT

(11) **EP 0 597 271 B1**
(45) Veröffentlichungstag und Bekanntmachung des Hinweises auf die Patenterteilung: **03.06.1998**
(21) Anmeldenummer: 93116600.3
(22) Anmeldetag: 14.10.1993
(51) Int. Cl.: F04C 13/00, B29C 47/76

(54) **Verfahren und Stufe zur Behandlung einer Thermoplastschmelze mit einer Zahnradpumpe**
Arrangement for treating thermoplastic melt with a gear pump
Procédé pour le traitement de fonte thermoplastique avec une pompe à engrenages

(30) Priorität: 28.10.1992 CH 3360/92; 19.04.1993 CH 1179/93
(43) Veröffentlichungstag der Anmeldung: 18.05.1994
(60) Teilanmeldung: 97120833.5
(73) Patentinhaber: Maag Pump Systems Textron AG, 8023 Zürich (CH)
(72) Erfinder: Stehr, Roger, Dr. Ing., CH-8180 Bülach (CH)
(74) Vertreter: Troesch Scheidegger Werner AG

(56) Entgegenhaltungen:
- EP-A- 0 189 670
- EP-A- 0 200 152
- CH-A- 573 053
- DE-A- 1 935 203
- DE-A- 3 133 647
- DE-A- 3 529 528
- DE-A- 4 125 128
- US-A- 3 746 481
- US-A- 3 817 668

## Beschreibung

Es sind Extrudertypen bekannt, welche es bauartbedingt nicht erlauben, entlang der Extrusionseinheit eine Schmelze zu entgasen. Ein wesentlicher Vertreter dieses Extrudertyps ist der sog. "Planetwalzenextruder", wie er beispielsweise aus der DE-PS 31 33 647 bekannt ist. Eine Entgasung des Fördermediums kann bei diesen Extrudern erst nach Verlassen der Extrusionseinheit erfolgen.

Gebräuchliche Entgasungsextruder verfügen zwar über eine oder mehrere Entgasungsöffnungen im Zylinder, die Wirksamkeit der Schmelzeentgasung ist jedoch aufgrund der geringen erreichbaren Schmelzeoberfläche stark eingeschränkt.

Um der Forderung nach intensiver Schmelzeentgasung nachzukommen, sind zweistufige Extrusionssysteme in Kaskadenbauweise vorgeschlagen worden, wobei zwischen den Extrusionsstufen ein Entgasungsschacht zwischengeschaltet wurde, mit angeschlossener Vakuumpumpe.

Solche Kaskadensysteme weisen den Nachteil einer grossen verfahrenstechnischen Länge auf, welche einen entsprechend hohen Aufwand zur Wärmestabilisierung des Fördermediums erforderlich macht. Darüberhinaus erfordert eine grosse verfahrenstechnische Länge den entsprechenden Raumbedarf sowie grosse Mengen von Antriebs- und Heizenergie.

Aus der US- 3 817 668 ist es bekannt, vorwiegend niederviskose thermoplastische Polymerschmelzen aus einem bezüglich Umgebungsdruck auf Unterdruck gesetzten Behältnis, z.B. aus einer Reaktorbirne mittels einer Zahnradpumpe zu fördern.

Aufgrund konstruktiver Ausführung und begrenztem Einsatzspektrum (Viskosität) wurden bisher diese aus der Polymersynthese bekannten Pumpen in der Kunststoffextrusion kaum eingesetzt.

Aus der EP-A-0 200 152 ist ein Verfahren zur Behandlung einer Thermoplastschmelze bekannt, bei dem ein Schmelzestrang frei durch eine Unterdruck-beaufschlagte Entgasungsstrecke hindurch auf die in einem Kämmbereich kämmenden Rotoren einer mit Unterdruck betreibbaren Zahnradpumpe eingespiesen wird. Dabei wird der Schmelzestrang in den Kämmbereich der Pumpenrotoren eingespiesen.

Im Rahmen des steigenden Umweltbewusstseins besteht nun einerseits mehr und mehr das Bedürfnis, Kunststoffabfälle (post consumer waste) wiederzuverwerten. Anderseits sollen auch mehr und mehr thermisch sensible Thermoplastschmelzen und dabei insbesondere PVC-Schmelzen verarbeitet werden. Auf die Verarbeitung von thermoplastischen Kunststoffabfällen (post consumer waste) und von PVC bezieht sich die vorliegende Erfindung.

Sie setzt sich zur Aufgabe, ein Verfahren bzw. eine Behandlungsstufe letztgenannter Art so weiterzubilden, dass sie für thermoplastische Kunststoffabfälle oder für PVC einsetzbar ist.

Dies wird am Verfahren letztgenannter Art bei dessen Ausbildung nach dem kennzeichnenden Teil von Anspruch 1 erreicht, bei einer Behandlungsanlage genannter Art bei deren Ausbildung nach dem kennzeichnenden Teil von Anspruch 3.

Es hat sich nämlich gezeigt, dass für die erfindungsgemässe Verarbeitung, einerseits von thermoplastischen Kunststoffabfällen, deren Zusammensetzung in sehr weitem Bereich variierbar ist, und welche unterschiedlich stark verschmutzt sein können, anderseits von PVC, die Speisung der vorgesehenen Zahnradpumpen mittels eines Stranges der Schmelze ausserhalb des Kämmbereiches, bevorzugterweise mit einem Mehrfachstrang erforderlich ist. Dies gilt auch für die Verarbeitung von PVC.

Bei den genannten Abfällen müssen Lösungsmittelanteile von Druckfarben und Restfeuchteanteile jeder Art abgeführt werden, um qualitativ brauchbare Sekundärprodukte zu erhalten.

Um somit eine möglichst grosse erreichbare Schmelzeoberfläche für die Entgasung auszunützen, wird vorgeschlagen, dem Wortlaut von Anspruch 2 zu folgen.

Zur intensiven Schmelzeentgasung ist eine, bezogen auf das Schmelzevolumen möglichst grosse Schmelzeoberfläche erforderlich.

Bei Vorgehen gemäss der vorliegenden Erfindung ist es für die erwähnten zu verarbeitenden Medien ohne weiteres möglich, verfahrenstechnische Länge verglichen mit Kaskadensystemen kurz zu halten und einem Extruder einen Entgasungsschacht und letzterem eine aus Unterdruck beschickbare Zahnradpumpe nachzuschalten.

Aus der CH-PS 573 053 sowie der US-PS 3 746 481 sind Zahnradpumpen bekannt, welche ausgelegt sind, um gegenüber Umgebungsdruck mit Unterdruck beschickt zur werden. Diese Pumpen erlauben mithin, auch bei Beschickung aus dem Unterdruck vollständig gefüllt betrieben zu werden und damit den für Zahnradpumpen typischen, konstanten Austragsdruck zu liefern. Allerdings sind diese Pumpen für das Fördern stark verschmutzter Thermoplastschmelzen, insbesondere aufgrund der Rotorwellendichtungen, üblicherweise mittels Gleitringdichtungen oder auch Stopfbuchspackungen, nicht geeignet.

Bevorzugterweise wird deshalb eine Pumpe gemäss Anspruch 4 eingesetzt.

Zwar ist es aus der EP-A-0 189 670 bekannt, wie eine Zahnradpumpe zur Förderung thermisch sensibler Polymere, wie von PVC, zu gestalten ist, d.h. so, dass das Fördermedium das Schmiermedium für die Wellenlager bildet und Fliesswege für das Fördermedium axial entlang der Rotorwellen in die Umgebung vorgesehen sind. Die dort beschriebene Zahnradpumpe ist aber nicht in der Lage, aus dem Unterdruck zu fördern, also aus Druckverhältnissen, welche das Vortreiben des Fördermediums als Schmiermedium eher problematisch erscheinen lassen.

Es wird ober vorliegendenfalls erkannt, dass sich die aus der CH-PS-573 053 prinzipiell bekannte Zahnradpumpe, die üblicherweise zum Austragen dünn- bis mit- telviskoser Medien aus einer unter Unterdruck stehenden Reaktorbirne eingesetzt wird, dann auch für das Fördern von stark verschmutzten Thermoplastschmelzen ohne weiteres eignet, wenn ihre Rotoren gemäss einer üblicherweise für den Einsatz zwischen Extruder und Extrusionswerkzeug eingesetzten Zahnradpumpe, nämlich gemäss der EP-A-0 189 670, gelagert werden, obwohl sie aus Unterdruck beschickt wird.

Heitere bevorzugte Ausführungsvarianten der erwähnten Behandlungsstufe sind in den Ansprüchen 5 bis 11 spezifiziert.

Die Erfindung wird anschliessend beispielsweise anhand von Figuren erläutert.

Es zeigen:
- Fig. 1: einen Längsschnitt durch eine bevorzugt eingesetzte Zahnradpumpe;
- Fig. 2: einen Querschnitt durch die Zahnradpumpe nach Fig. 1;
- Fig. 3: schematisch eine Anlage zur Herstellung einer Thermoplastschmelze mit erfindungsgemässer Behandlungsstufe;
- Fig. 4: ein erfindungsgemässes Extrusionssystem mit erfindungsgemässer Behandlungsstufe.

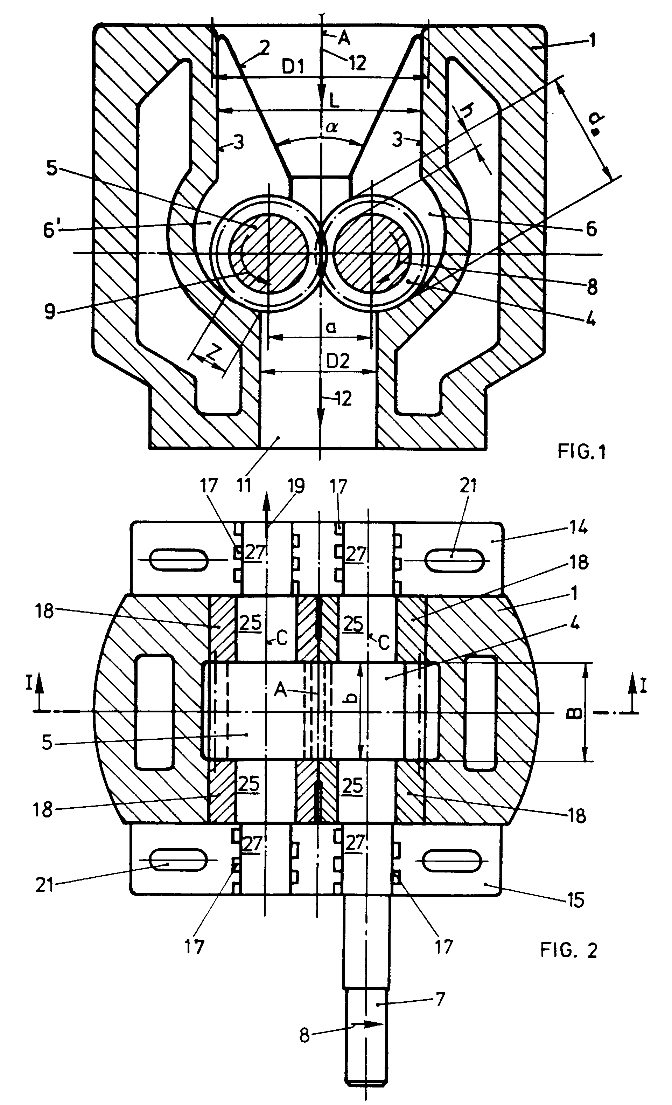

Gemäss Fig. 1 weist eine Pumpe ein Gehäuse 1 auf, worin ein Beschickungstrichter 2 integriert ist, welcher oberhalb der Pumpenzahnräder 4 bzw. 5 liegt.

Bevorzugterweise weist der Beschickungstrichter 2 einen Kegelöffnungswinkel α zwischen 36° und 60° auf. Eingearbeitet in den Trichter 2 sind, sich gegenüberliegend, Ausnehmungen 3 eingearbeitet, welche, von oben betrachtet, gemeinsam einen Rechteckquerschnitt aufspannen. Dabei ist der Abstand B (Fig. 2) zwischen den beiden parallel zu den Stirnseiten der Zahnräder 4 und 5 und der Trichterachse A verlaufenden Seitenwänden der Ausnehmungen 3 annähernd gleich der Breite b (Fig. 2) der Zahnräder. Der Abstand L zwischen den parallel zu den Zahnradachsen C und zur Trichterachse A verlaufenden Seitenwänden der beiden vorzugsweise vorgesehenen Ausnehmungen 3 ist annähernd gleich der Summe der Zahnradaussendurchmesser dₐ minus einer Zahnhöhe h.

Anschliessend an je die rechteckigen Ausnehmungen 3, d.h. an deren den Zahnrädern zugewandten unteren Enden, schliesst eine sichelförmige Ausnehmung 6, 6' an, die die Kompressionszone für das dem Beschikkungstrichter 2 zugeführte Fördermedium, die Thermoplastschmelze bildet. Der grösste radiale Abstand vom Kopfmantelzylinder des jeweiligen Zahnrades entspricht mindestens der Zahnhöhe h. Die anschliessende Dichtungszone Z hat die Minimallänge einer Zahnteilung der Zahnräder 4 und 5 und bildet mit dem Kopfmantelzylinder des zugeordneten Zahnrades einen engen Spalt.

Bei Antrieb einer Welle 7 in Pfeilrichtung 8 dreht auch das Zahnrad 4 in derselben Drehrichtung und damit das Zahnrad 5 in einer gegenläufigen Drehrichtung 9. Dadurch wird das zu fördernde Medium in Pfeilrichtung 12 mitgenommen und tritt in die Zahnlücken der Zahnräder 4 und 5 ein, wird in der Kompressionszone verdichtet und noch vollständig in die Zahnlücken hineingedrückt. Dann tritt es durch eine Austrittsöffnung 11 aus.

Vorteilhafterweise wird der grösste Durchmesser des Beschickungstrichters 2, D1, zwischen dem 2,1 und 2,3fachen Achsabstand a der Zahnräder 4 und 5 gewählt. Der Durchmesser D2 der Austrittsöffnung 11 wird weiter vorteilhafterweise im wesentlichen als Hälfte des grössten Durchmessers D1 des Beschickungstrichters 2 gewählt.

Aus Fig. 2 ist ersichtlich, dass die Rotorwellen an den jeweiligen Zahnrädern 4 und 5 mittels Wellenlagerabschnitten 25 in Gleitlagern 18 gelagert sind und mittels Verlängerungszapfen 27 weiter nach aussen geführt sind und durch die jeweiligen Pumpendeckel 14 bzw. 15 nach aussen in die Umgebung ausmünden. Die Verlängerungszapfen 27 laufen in den Pumpendeckeln 15 bzw. 14 in Labyrinthdichtungen 17, welche gebildet sind durch schraubenförmige Nuten in den Wellenzapfen 27 und/oder in den Pumpendeckeln 15 bzw. 14.

Die bevorzugte Förderrichtung der Labyrinthdichtungen 17 ist in Fig. 2 mit dem Pfeil 19 dargestellt.

Ein kleiner Anteil (%o) der durch den Beschickungstrichter 2 zugeführten verschmutzten Thermoplastschmelze wird axial in Richtung 19 als Schmiermedium durch die Gleitlager 18 durchgepresst und anschliessend durch Förderwirkung der Labyrinthdichtungen 17 als Abfall in die Umgebung ausgegeben. Im Gehäuse 1 wie auch in den Pumpendeckeln 14 und 15 sind Kanäle 21 für ein Kühlmedium vorgesehen.

Mit dieser Pumpe lassen sich stark verschmutzte Thermoplastschmelzen oder PVC-Schmelzen ab einem im Beschickungstrichter 2 gegenüber Umgebungsdruck herrschenden Unterdruck mit für Zahnradpumpen üblichem konstantem Ausgabedruck aus der Austrittsöffnung 11 austragen.

Die vorgesehenen Gleitlager mit auswärts liegenden Labyrinthdichtungen und Ausmündung der Wellenzapfen in die Umgebung ermöglichen es, die Lager mittels des Fördermediums zu schmieren und dabei den als Schmierstrom abgezweigten Fördermediumstrom als Abfall nach aussen auszutragen.

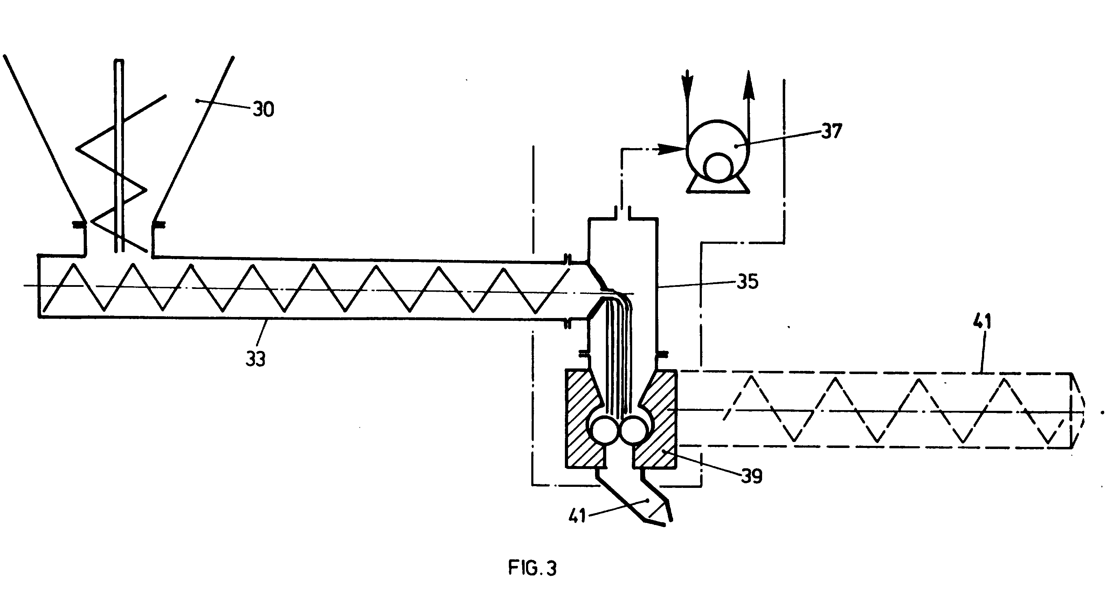

In Fig. 3 ist schematisch eine erfindungsgemässe Behandlungsstufe dargestellt, strichpunktiert umrandet. Ein Extrusionssystem umfasst hier als Beispiel ein Stopfwerk 30 und, dem nachgeschaltet, ein beliebig aufgebauter ein- oder mehrschneckiger Extruder 33, ausmündend über eine Mehrstrangdüse 31 in den Entgasungsschacht 35 der erfindungsgemässen Behandlungsstufe. Bei Bedarf können zusätzlich dabei zwischen den Extruder 33 und den Entgasungsschacht 35 ein oder mehrere Schmelzefilter installiert sein. Die Entgasung der im Extruder 33 erzeugten, stark verschmutzten Thermoplastschmelze oder PVC-Schmelze erfolgt im Entgasungsschacht 35 mit Hilfe der Vakuumpumpe 37. Der dadurch, mit Bezug auf Umgebungsdruck, auf Unterdruck gelegte Entgasungsschacht 35 mündet in die Beschickungsöffnung einer Zahnradpumpe 39 ein, welche so ausgebildet ist, dass sie bei beschickungsseitigem Unterdruck ausgangsseitig den für Zahnradpumpen üblichen konstanten Austragsdruck liefert. Sie mündet beispielsweise in ein Extrusionswerkzeug 41 aus.

Wie ersichtlich, wird durch Vorsehen der wie spezifiziert ausgebildeten Austragszahnradpumpe 39 die verfahrenstechnische Länge des Extrusionssystems wesentlich reduziert gegenüber konventionellen Kaskadensystemen mit dem Entgasungsschacht 35 und nachgeschalteter, zweiter Extrusionsstufe 40 (wie gestrichelt angedeutet). Dabei wird durch Vorsehen der Düse 31 diese Behandlung von Kunststoffabfällen genannter Art oder von PVC-Schmelzen erst reproduzierbar und damit kommerziell möglich.

Als Austragspumpe 39 wird bevorzugterweise die Pumpe, wie sie prinzipiell anhand der Fig. 1 und 2 erläutert wurde, eingesetzt.

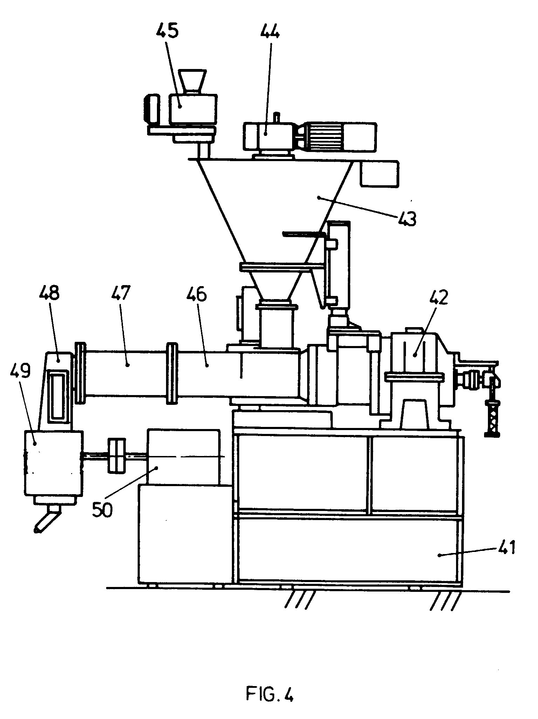

In Fig. 4 ist schematisch eine heute bevorzugte, erfindungsgemässe Behandlungsstufe dargestellt. Es bezeichnen
41: den Maschinenrahmen; 42: das Antriebsgetriebe für den Extruder; 46, 47: Extrusionsteil mit Strangdüse, welche in den Entgasungsschacht 48 ausmündet; 49: die Austragszahnradpumpe; 43: das Stopfwerk (beispielhaft); 45: ein vorgesehener Metallausscheider; 44: den Antrieb für das Stopfwerk 43. Mit 50 ist der Antrieb für die Austragszahnradpumpe 49 dargestellt.

## Patentansprüche

1. Verfahren zur Behandlung einer Thermoplastschmelze, bei dem mindestens ein Schmelzestrang durch Schwerkraft frei durch eine unterdruckbeaufschlagte Entgasungsstrecke hindurch auf die in einem Kammbereich kämmenden Rotoren einer mit Unterdruck betreibbaren Zahnradpumpe eingespiesen wird, welch letztere den Austragsdruck für die Schmelze aufbaut, dadurch gekennzeichnet, dass als Schmelze PVC und/oder thermoplastische Kunststoffabfälle variierender Zusammensetzung behandelt wird und die Rotoren ausserhalb ihres Kämmbereiches mit dem Strang beaufschlagt werden.

2. Verfahren nach Anspruch 1, dadurch gekennzeichnet, dass die Schmelze den Rotoren in mehr als einem Strang zugespiesen wird.

3. Behandlungsstufe für eine Thermoplastschmelze mit einem im wesentlichen vertikalen Entgasungsschacht (35), eingangsseitig des Entgasungsschachtes einer Strangdüse, ausgangsseitig einer gegenüber Umgebungsdruck mit Unterdruck beschickbaren Zahnradpumpe (39) für den Aufbau des Austragdruckes der Schmelze, wobei bezüglich eines Kämmbereiches der Zahnradpumpenrotoren die Strangdüse so angeordnet ist, dass die Rotoren ausserhalb ihres Kämmbereiches vom Strang beaufschlagt werden.

4. Behandlungsstufe nach Anspruch 3, dadurch gekennzeichnet, dass die Zahnradpumpe einen oberhalb der Zahnräder (4, 5) liegenden, sich gegen die Zahnräder hin verjüngenden Eintrittstrichter (2) aufweist und die Wellen (25) der Rotoren so gelagert sind, dass das Fördermedium das Schmiermedium für die Wellenlager (18) bildet und Fliesswege (17) für das Fördermedium axial entlang der Rotorwellen (27) in die Umgebung vorgesehen sind.

5. Behandlungsstufe nach Anspruch 4, dadurch gekennzeichnet, dass der Trichter mit einem zwischen 36° und 60° liegenden Kegelwinkel (α) ausgestattet ist und/oder vorzugsweise mit einer im Querschnitt rechteckigen Ausnehmung (3) versehen ist, vorzugsweise mit zwei sich gegenüberliegenden, rechteckigen Ausnehmungen (3), wobei der Abstand (B) zwischen den beiden parallel zu den Stirnseiten der Zahnräder und der Trichterachse (A) verlaufenden Seitenwänden der Ausnehmung (3) annähernd gleich der Zahnradbreite (b) ist und gegebenenfalls der Abstand (L) zwischen den parallel zu den Zahnradachsen und zur Trichterachse verlaufenden Seitenwänden der Ausnehmungen annähernd gleich der Summe der Zahnradaussendurchmesser minus einer Zahnhöhe ist.

6. Behandlungsstufe nach einem der Ansprüche 4 oder 5, dadurch gekennzeichnet, dass der grösste Durchmesser des Trichters gleich der 2,1 bis 2,3fachen Achsdistanz (a) der Zahnräder ist.

7. Behandlungsstufe nach einem der Ansprüche 4 bis 6, dadurch gekennzeichnet, dass am unteren Ende der vorgesehenen Ausnehmungen (3) je eine im Querschnitt sichelförmige Kompressionspartie (6) angeformt ist, deren grösster radialer Abstand vom Kopfmantelzylinder des nächstliegenden Zahnrades mindestens gleich der Zahnhöhe (h) ist, an welcher Kompressionspartie (6) ein sich über mindestens eine Zahnteilung der Zahnräder erstreckender Abschnitt (Z) anschliesst, der mit dem Kopfmantelzylinder besagten nächstliegenden Zahnrades einen engen Spalt bildet.

8. Behandlungsstufe nach einem der Ansprüche 4 bis 7, dadurch gekennzeichnet, dass der Durchmesser (D₂) der Austrittsöffnung kleiner als die Hälfte des grössten Durchmessers des Trichters (D₁) ist.

9. Behandlungsstufe nach einem der Ansprüche 3 bis 8, dadurch gekennzeichnet, dass im Zahnradpumpengehäuse (1) Kanäle (21) für ein Heizmedium vorgesehen sind, vorzugsweise auch in den Pumpendeckeln (14, 15).

10. Behandlungsstufe nach einem der Ansprüche 3 bis 9, dadurch gekennzeichnet, dass die Rotorwellen zweiseitig in Gleitlagern (18) gelagert sind und die gelagerten Wellenzapfen je eine Verlängerung (27) mit Labyrinthdichtung (17) aufweisen, dabei vorzugsweise die Förderrichtung (19) der Labyrinthdichtungen von den Gleitlagern (18) nach aussen weist.

11. Behandlungsstufe nach einem der Ansprüche 3 bis 10, dadurch gekennzeichnet, dass die Pumpenwellen (27) stirnseitig in die Umgebung ausmünden.

## Claims

1. Method for processing a thermoplastic fusion, according to which at least one fusion strand is supplied by gravity freely through a degassing path charged by a depression onto the rotors meshing in a meshing region of a gear pump which may be controlled by a depression and which produces the output pressure for the fusion, characterized in that as fusion are proceeded PVC and/or thermoplastic material waste of varying composition and the rotors are charged outside of their mushing region by the strand.

2. Method according to claim 1, characterized in that the fusion in supplied to the rotors as more than one strands.

3. Processing arrangement for a thermoplastic fusion with a substantially vertically extending degassing well (35), a strand die on the inlet side of the degassing well, on the outlet side a gear pump (39) which can be supplied by a depression with respect to the surrounding pressure, for the establishment of the outlet pressure of the fusion, the strand die being providing with respect to the meshing region of the gear pump in a way that the rotors are charged by the strand outside of their meshing region.

4. Processing arrangement according to claim 3, characterized in that the gear pump comprises above the gear wheels (4, 5) a supply or inlet hopper which goes narrowing towards the gear wheels, and the shafts (25) of the rotors are supported in a way that the transport medium constitutes the lubricating medium for the shaft bearings (18) and flow paths (17) for the transport medium are provided axially along the rotor shaft (27) towards the exterior.

5. Processing arrangement according to claim 4, characterized in that the hopper has a cone angle (α) between 36° and 60° and/or preferably is provided with a recess (3) having a rectangular cross section, preferably with two rectangular recesses (3) facing one another, the distance (B) between the two side walls extending in a parallel relationship to the front sides of the gear wheels and the hopper axis (A) of the recess (3) are approximately equal to the gear wheel width (b) and, occasionally the distance (L) between the side walls extending in a parallel relationship extending to the gear wheel axes and the hopper axis from the recesses are approximately equal to the sum of the gear wheel diameters less a tooth height.

6. Processing arrangement according to one of claim 4 to 5, characterized in that the greatest diameter of the hopper is equal to 2, 1 to 2,3 times the distance of the axes of the gear wheels.

7. Processing arrangement according to any of claim 4 to 6, characterized in that that the lower end of the provided recess (3) is shaped as a compression portion (6) the cross section of which has the shape of a sickle having a greatest distance from the top shirt cylinder of the nearest gear wheel at least equal to the tooth height, to the compression portion (6) following a section (Z) extending at least over a teeth pitch of the gear wheels and which constitutes with said top shirt cylinder of said nearest gear wheel a narrow slit.

8. Processing arrangement according to any of claim 4 to 7, characterized in that the diameter (D₂) of the outlet opening is smaller than the half of the greatest diameter of the hopper (D₁).

9. Processing arrangement according to any of claim 3 to 8, characterized in that in the gear pump housing 1 are provided channels (21) for a heating medium, preferably also in the pump covers (14, 15).

10. Processing arrangement according to any of claim 3 to 9, characterized in that the rotor shaft are supported on both sides in sliding bearings (18) and the supported shaft journals have each an elongation (27) with a labyrinth seal (17), preferably the transport direction (19) of the labyrinth seals of the sliding bearings (18) being oriented towards the exterior.

11. Processing arrangement according to any of claim 3 to 10, characterized in that the pump shaft (27) are ending on their front sides in the exterior.

## Revendications

1. Procédé pour le traitement d'une fusion thermoplastique, selon lequel au moins un brin de fusion est amené, sous l'effet de la gravité, librement, à travers un chemin de dégazage sollicité par une dépression, sur les rotors s'engrenant dans une zone d'engrènement d'une pompe à engrenages susceptible de fonctionner à une dépression, qui produit la pression de sortie pour la fusion, caractérisé en ce qu'on traite comme fusion du PVC et/ou des déchets de matière synthétique thermoplastiques d'une composition qui varie et que les rotors sont chargés du brin à l'extérieur de leur zone d'engrènement.

2. Procédé selon la revendication 1, caractérisé en ce que la fusion est fournie au rotor en forme d'un ou de plusieurs brins.

3. Etage de traitement pour une fusion thermoplastique, avec un puits de dégazage sensiblement vertical (35), une filière de brin à l'entrée du puits de dégazage, une pompe à engrenages (39) susceptible d'être chargée à une dépression par rapport à la pression environnante, située du côté de sortie, pour l'établissement de la pression de sortie de la fusion, la filière de brin étant disposée par rapport à la zone d'engrènement des rotors de pompe à engrenages de façon que les rotors soient chargés du brin à l'extérieur de leur zone d'engrènement.

4. Etage de traitement selon la revendication 3, caractérisé en ce que la pompe à engrenages comprend une trémie d'entrée (2) située au-dessus des pignons (4, 5) et se rétrécissant en direction des pignons, et les arbres (25) des rotors sont supportés de façon que le milieu a transporter forme le milieu de lubrification des paliers d'arbre (18) et que des chemins d'écoulement (17) sont prévus pour le milieu à transporter axialement le long des arbres de rotor (27) dans l'environnement.

5. Etage de traitement selon la revendication 4, caractérisé en ce que la trémie présente un angle de cône (α) d'une valeur comprise entre 36° et 60° et/ou est pourvu, de préférence, d'un évidemment (3) d'une section transversale rectangulaire, avec de préférence deux évidements (3) rectangulaires et situés en regard, la distance (B) entre les deux parois latérales s'étendant parallèlement aux côtés frontaux des pignons et à l'axe de puits (A), de l'évidemment (3), étant approximativement égale à la largeur de pignon (b) et, le cas échéant, la distance (L) entre les parois latérales s'étendant parallèlement aux axes de pignon et à l'axe de trémie, des évidements, étant approximativement égale à la somme des diamètres extérieurs des pignons moins une hauteur de dents.

6. Etage de traitement selon l'une des revendications 4 ou 5, caractérisé en ce que le diamètre le plus grand de la trémie est égal a 2,1 à 2,3 fois l'entraxe (a) des pignons.

7. Etage de traitement selon l'une des revendications 4 à 6, caractérisé en ce qu'à l'extrémité inférieure des évidements prévus (3) est réalisée une partie de compression (6) présentant dans la section transversale la forme d'une faucille et dont la distance radiale la plus grande du cylindre de jupe de tète du pignon le plus proche est au moins égale à la hauteur de dents (h), à la partie de compression (6) faisant suite une section (Z) s'étendant au moins sur un pas de dent des pignons et qui forme avec le cylindre de jupe de tête dudit pignon le plus proche une fente étroite.

8. Etage de traitement selon l'une des revendications 4 à 7, caractérisé en ce que le diamètre (D2) de l'ouverture de sortie est inférieur à la moitié du diamètre le plus grande de la trémie (D1).

9. Etage de traitement selon l'une des revendications 3 à 8, caractérisé en ce que des canaux (21) pour un milieu de chauffage sont prévus dans le carter de pompe a engrenages, de préférence également dans les couvercles de pompe (14, 15).

10. Etage de traitement selon l'une des revendications 3 à 9, caractérisé en ce que les arbres de rotor sont supportés aux deux extrémités dans des paliers à glissement (18) et les tourillons d'arbre supportés présentent chacun un prolongement (27) avec une bague a labyrinthe (17), la direction de transport des bagues à labyrinthe des paliers à glissement (18) étant orientée, de préférence, vers l'extérieur.

11. Etage de traitement selon l'une des revendications 3 à 10, caractérisé en ce que les arbres de pompe (27) débouchent, du côté frontal, dans l'environnement.
